# EUROPÄISCHE PATENTSCHRIFT

(11) **EP 0 857 689 B1**
(45) Veröffentlichungstag und Bekanntmachung des Hinweises auf die Patenterteilung: **25.08.1999**
(21) Anmeldenummer: 98100504.4
(22) Anmeldetag: 14.01.1998
(51) Int. Cl.: C01C 3/10, C01C 3/08

(54) **Verfahren zur Herstellung von Alkalicyanid- und Erdalkalicyanid-Granulaten und hierbei erhältliche Alkalicyanid-Granulate hoher Reinheit**
Process for the preparation of alkali or alkaline-earth metal cyanide granulates and the obtained high purity alkali metal cyanide granulates
Procédé pour la production de granulés de cyanures des métaux alcalins ou alcalino-terreux et des granulés à haute purété de cyanures des métaux alcalins

(30) Priorität: 05.02.1997 DE 19704180
(43) Veröffentlichungstag der Anmeldung: 12.08.1998
(73) Patentinhaber: Degussa-Hüls Aktiengesellschaft, 45764 Marl (DE)
(72) Erfinder: Schütte, Rüdiger, Dr., 60325 Frankfurt (DE); Alt, Christian, 63571 Gelnhausen-Meerholz (DE); Becker-Balfanz, Catrin-Dorothee, 65929 Frankfurt (DE); Sauer, Manfred, Dr., 63517 Rodenbach (DE); von Hippel, Lukas, Dr., 63755 Alzenau (DE); Feuer, Oliver, 61130 Nidderau (DE); Lorösch, Jürgen, Dr., 63607 Wächtersbach (DE)

(56) Entgegenhaltungen:
- EP-A- 0 600 211
- EP-A- 0 600 282
- DE-A- 3 832 883
- CHEMICAL ABSTRACTS, vol. 88, no. 10, 6.März 1978 Columbus, Ohio, US; abstract no. 63791, OZAKI, TOSHIHARU ET AL: "High-purity alkali metal cyanide" XP002064496 & JP 52 110 300 A (NIPPON SODA CO., LTD., JAPAN)

## Beschreibung

Die Erfindung betrifft ein Verfahren zur Herstellung von Alkalicyanid- und Erdalkalicyanid-Granulaten, insbesondere Granulaten aus im wesentlichen Natriumcyanid, Kaliumcyanid und Calciumcyanid. Das Verfahren basiert auf der Umsetzung von Cyanwasserstoff mit einem Alkalihydroxid oder Erdalkalihydroxid in einer Wirbelschicht und wird nachfolgend als Reaktionswirbelschichtgranulation (RWG) bezeichnet. Die Erfindung richtet sich ferner auf durch das Verfahren erhältliche kugelförmige NaCN- und KCN-Granulate, welche sich durch eine hohe Reinheit auszeichnen.

Natrium- und Kaliumcyanid finden breite Verwendung zur Herstellung galvanischer Bäder und Härtesalzbäder sowie zur Synthese organischer Verbindungen; Natriumcyanid sowie Calciumcyanid werden in großen Mengen zur Goldgewinnung durch Cyanidlaugung von Erzen eingesetzt. Für das Einsatzgebiet der galvanischen Bäder müssen die Alkalicyanide zusätzlich eine hohe Reinheit aufweisen: Während ein geringer Gehalt an Alkalihydroxid im Alkalicyanid der Stabilisierung dient, muß der Gehalt an Alkalicarbonat und Alkaliformiat möglichst niedrig sein. Im Hinblick auf eine sichere Handhabung müssen die Cyanide meistens in staubfreier Granulatform vorliegen.

Es ist bekannt, Alkalicyanide durch Neutralisation von Cyanwasserstoff (HCN) und Alkalihydroxid in wäßrigen Lösungen mit anschließender Kristallisation, Fest-Flüssig-Trennung und folgender mechanischer Formgebung herzustellen. Derartige Verfahren sind sehr aufwendig, und die Produkte neigen zur Staubbildung und sind daher schwer handhabbar. Besonders nachteilig ist die Notwendigkeit, daß zur Herstellung reiner Produkte ein Teil der Mutterlauge ausgeschleust werden muß, um der Anreicherung von Nebenprodukten entgegenzuwirken. Üblicherweise werden zwischen 10 und 30 % Alkalicyanid mit der Mutterlauge ausgeschleust.

Der bislang technisch sehr aufwendige Prozess zur Formgebung von Alkalicyaniden konnte durch die sogenannte Wirbelschicht-Sprühgranulation, wie sie in der EP-A 0 600 282 beschrieben wird, wesentlich verbessert werden. Bei dem genannten Verfahren wird eine Alkalicyanidlösung auf eine Wirbelschicht aus Keimen aus Alkalicyanid aufgesprüht und das eingetragene Wasser mittels eines durch die Wirbelschicht strömenden Trocknungsgasstromes verdampft. Erhalten wird ein Granulat aus im wesentlichen kugelförmigen Teilchen, das einen sehr niedrigen Abrieb und einen geringen Verbackungsindex aufweist. Da zur Durchführung des Verfahrens der EP-A 0 600 282 eine wäßrige Alkalicyanidlösung erforderlich ist und diese in bekannter Weise durch Neutralisation von HCN mit Alkalihydroxid in wäßriger Lösung erhalten wird, enthält diese Lösung auch die bekannten Nebenprodukte, darunter insbesondere das entsprechende Carbonat und Formiat. Aufgrund der Verwendung der Nebenprodukte enthaltenden Alkalicyanidlösung können auch die daraus hergestellten Alkalicyanid-Granulate keine höhere Reinheit als die Lösung aufweisen. Durch Reaktion des in der Fluidisierungs- / Trocknungsluft enthaltenen Kohlendioxids mit dem in der Alkalicyanidlösung enthaltenen überschüssigen Alkalihydroxid wird zusätzlich Alkalicarbonat gebildet, so daß der Alkalicarbonatgehalt in den Alkalicyanid-Granulaten im allgemeinen größer ist als jener von durch einen Kristallisationprozeß mit nachfolgender Formgebung hergestellten Alkalicyaniden.

Ein ganz anderes Verfahren zur Herstellung von festen teilchenförmigen Alkalicyaniden ist aus der DE-A 38 32 883 bekannt: In diesem Verfahren wird ein Cyanwasserstoff enthaltendes Gas kontinuierlich mit feinverteilten Tröpfchen einer wäßrigen Alkalihydroxidlösung zur Reaktion gebracht, während gleichzeitig eingebrachtes und gebildetes Wasser verdampft und abgeschiedene feste Teilchen nach ihrer Abtrennung einer Formgebung und/oder Nachtrocknung zugeführt werden. Bei diesem Verfahren handelt es sich somit um eine Sprühtrocknung, welche mit einer Gas-Flüssig-Reaktion, hier einer Neutralisation, kombiniert ist. Mit diesem Verfahren werden nur dann Produkte mit hohem Alkalicyanidgehalt erhalten, wenn HCN in hohem Überschuß und Alkalihydroxidlauge in geringer Konzentration eingesetzt werden. Die Kombination von Sprühtrocknung und Neutralisation hat den Nachteil, daß die feinen Tropfen von außen beginnend, dort wo sich Alkalicyanid gebildet hat, trocknen. Die Diffusion des HCN-Gases in den inneren Kern der Tröpfchen, wo noch flüssige Alkalihydroxidlösung vorliegt, wird mit zunehmender Feststoffschicht im äußeren Bereich erschwert. Um einen hohen Umsatz zu erzielen, muß demnach die Triebkraft der Diffusion hoch sein, was durch einen hohen HCN-Überschuß und/oder eine Verringerung der Trocknungszeit begünstigt wird. Hierdurch wird jedoch die Raum-Zeit-Ausbeute des Verfahrens gemindert. Ein weiterer Nachteil dieses Verfahrens ist, daß das Produkt als feines Pulver anfällt und in zusätzlichen Verfahrensschritten zu einem handhabbaren Granulat verformt werden muß.

In der genannten DE-A 38 32 883 wird auch gelehrt, daß unter den für das Verfahren geeigneten Temperaturen praktisch keine Umsetzung zwischen festem, feinverteiltem Alkalihydroxid und gasförmigem Cyanwasserstoff stattfindet; die Umsetzung erfordert die Anwesenheit von Wasser und gelöstem Alkalihydroxid. Im Hinblick auf diese Lehre konnte dieses Verfahren auch nicht zur Herstellung von Erdalkalicyaniden, insbesondere Calciumcyanid, unter Einsatz einer wäßrigen Suspension eines Erdalkalihydroxids in Betracht gezogen werden.

Trojosky et al. beschreiben in Chem. Ing. Technik 9/95, Seite 184 ein Verfahren zur halbtrockenen Rauchgasentschwefelung durch Absorptionstrocknung in der Wirbelschicht. Bei diesem Verfahren wird in einem Wirbelschichtapparat mittels Zweistoffdüsen eine wäßrige Calciumhydroxid-Suspension auf die Oberfläche eines fluidisierten Haufwerks aufgetragen. Bei einer überstöchiometrischen Zugabe des Absorptionsmittels läßt sich zwar ein befriedigender Entschwefelungsgrad des Rauchgases erzielen, jedoch ist der Gipsanteil im ausgetragenen granulatförmigen Endprodukt zu niedrig, da es außer Gips in erheblichem Umfang noch Calciumoxid beziehungsweise Calciumhydroxid enthält. Aufgrund der unvollständigen Umsetzung und damit ungenügenden Reinheit des erhaltenen Granulats wird nicht nahegelegt, das in diesem Dokument beschriebene Verfahren zur Herstellung von Alkali- und Erdalkalicyaniden, insbesondere Alkalicyaniden hoher Reinheit, heranzuziehen.

Aufgabe der Erfindung ist, ein verbessertes Verfahren zur Herstellung von Alkalicyanid- und Erdalkalicyanid-Granulaten aufzuzeigen, das eine separate Herstellung einer wäßrigen Lösung eines Alkalicyanids oder Erdalkalicyanids überflüssig macht und zudem die Nachteile des auf einer Kombination einer Sprühtrockung und Neutralisation beruhenden vorbekannten Verfahrens vermeidet. Eine weitere Aufgabe der Erfindung besteht darin, ein Verfahren zur Herstellung von Natriumcyanid- und Kaliumcyanid-Granulaten aufzuzeigen, welche sich sowohl außer durch gute Granulateigenschaften, durch eine hohe Reinheit auszeichnen. Schließlich sollte es das erfindungsgemäße Verfahren ermöglichen, Cyanwasserstoff enthaltende Gase unterschiedlichster Entstehungsgeschichte und damit Gaszusammensetzung einzusetzen.

Gefunden wurde ein Verfahren zur Herstellung eines Alkalicyanid- oder Erdalkalicyanid-Granulats, umfassend eine Umsetzung von Cyanwasserstoff mit einem Alkali- oder Erdalkalihydroxid, wobei das Alkalihydroxid in Form einer wäßrigen Lösung und das Erdalkalihydroxid in Form einer wäßrigen Suspension in einen Reaktor eingesprüht und dort mit gasförmigem Cyanwasserstoff umgesetzt wird, und Verdampfen von in den Reaktor eingebrachtem und gebildetem Wasser, das dadurch gekennzeichnet ist, daß man die Umsetzung in einem Reaktor zur Wirbelschicht-Sprühgranulation bei einer Wirbelschichttemperatur im Bereich von 100 bis 250 °C durchführt, die genannte Lösung oder Suspension auf eine Wirbelschicht aus Keimen aus im wesentlichen dem herzustellenden Alkali- oder Erdalkalicyanid aufsprüht, gleichzeitig dem Reaktor ein Cyanwasserstoff enthaltendes Gas in einer Menge von mindestens einem Mol HCN pro Metalläquivalent zuführt und das Wasser mittels eines durch die Wirbelschicht strömenden Fluidisierungsgases, dessen Eingangstemperatur zwischen 110 und 500 °C liegt, verdampft.

Die von diesem Anspruch abhängigen Ansprüche 2 bis 13 richten sich auf bevorzugte Ausführungsformen des erfindungsgemäßen Verfahrens. Obgleich nach dem erfindungsgemäßen Verfahren Cyanidgranulate aller Alkalimetalle und Erdalkalimetalle hergestellt werden können, eignet sich das Verfahren insbesondere zur Herstellung von Natriumcyanid (NaCN)-, Kaliumcyanid (KCN)- und Calciumcyanid (Ca(CN)₂)-Granulaten. Das Verfahren eignet sich besonders gut zur Herstellung von NaCN- und KCN-Granulaten, insbesondere solchen hoher Reinheit.

Im erfindungsgemäßen Verfahren läuft in der Wirbelschicht am Einzelkorn folgender Vorgang ab: Das in den Reaktor eingebrachte HCN-Gas diffundiert in die Alkalihydroxidlauge beziehungsweise Erdalkalihydroxidsuspension, mit welcher die Keime benetzt sind, und reagiert dort zum entsprechenden Cyanid in gelöster Form. Diese Lösung wird auf der Partikeloberfläche von innen nach außen getrocknet - verbunden mit einem Wachstum der Keime. Dieser Vorgang unterscheidet sich von der bekannten Aufbaugranulation, bei der den granulatbildenden Stoff enthaltende Lösungen oder Suspensionen benutzt werden, dadurch, daß erst auf der Partikeloberfläche eine Neutralisationsreaktion stattfindet, wodurch der Wertstoff für das Partikelwachstum gebildet wird. Bei dieser Verfahrensweise behindert der Trocknungsprozeß nicht mehr die Diffusion des HCN-Gases, so daß hochkonzentrierte Laugen und HCN in nahezu stöchiometrischem Verhältnis eingesetzt werden können. Das bei der Reaktion gebildete Wasser sowie das mit der Lösung beziehungsweise Suspension eingetragene Wasser wird durch Zufuhr von Enthalphie aus der Neutralisationsreaktion und von latenter Wärme des heißen Fluidisierungsgases verdampft. Bei dem erfindungsgemäßen Prozeß handelt es sich damit um eine Reaktionswirbelschichtgranulation (RWG).

Das erfindungsgemäße Verfahren kann in beliebig ausgebildeten Reaktoren, welche für eine Wirbelschicht-Sprühgranulation geeignet sind, diskontinuierlich und kontinuierlich durchgeführt werden. Die Prinzipien der Wirbelschicht-Sprühgranulation, unterschiedlich ausgebildete Reaktoren zu ihrer Durchführung und Verfahrensvarianten sind dem Fachmann bekannt (beispielhaft wird auf H. Uhlemann in Chem. Ing. Tech. 62 (1990) Nr. 10, Seiten 822-834 verwiesen). Beispielsweise kann der Reaktor als mit einem Anströmboden (Wirbelschichtboden) versehener Rundbehälter oder als Fließrinne ausgebildet sein. Im Reaktor sind eine oder mehrere Sprühdüsen angeordnet, wobei sich die Düsenöffnung zweckmäßigerweise innerhalb der Wirbelschicht befinden. Die Ausrichtung der Düsen kann ein Sprühen von unten nach oben und/oder von oben nach unten oder im wesentlichen parallel zum Anströmboden ermöglichen. Für den kontinuierlichen Betrieb geeignete Reaktoren weisen im allgemeinen zudem eine Vorrichtung zum kontinuierlichen oder periodischen Austrag des Granulats auf, wobei diese Vorrichtung zweckmäßigerweise so ausgebildet ist, daß sie einen klassierenden Austrag des Granulatkorns erlaubt.

Zur Durchführung des Verfahrens wird dem Reaktor ein Cyanwasserstoff enthaltendes Gas zugeführt. Dieses Gas kann im Gemisch mit dem Fluidisierungsgasstrom in den Reaktor eingebracht werden. Alternativ hierzu oder zusätzlich zur vorgenannten Einbringungsart kann das Cyanwasserstoff enthaltende Gas auch oberhalb des Anströmbodens, insbesondere mittels innerhalb der Wirbelschicht angeordneter Düsen, in den Reaktor eingebracht werden. Sofern das Cyanwasserstoff enthaltende Gas dem Fluidisierungsgasstrom zugesetzt wird, kann dies unmittelbar unterhalb des Anströmbodens erfolgen oder bereits davor, beispielsweise vor dem Aufheizen des Fluidisierungsgases.

Das Einbringen der Alkalihydroxidlösung beziehungsweise der Erdalkalihydroxidsuspension in den Reaktor erfolgt mittels üblicher Sprühvorrichtungen, beispielsweise mittels Einstoffdruckdüsen oder mittels Mehrstoffdüsen. Bei der Verwendung von Zweistoffdüsen kann eine Stoffkomponente die Alkalihydroxidlösung oder Erdalkalihydroxidsuspension und die zweite Stoffkomponente ein übliches Treibgas, etwa N₂, oder ein cyanwasserstoffhaltiges Gas sein. Die zu versprühende Alkalihydroxidlösung kann eine beliebige Konzentration an Alkalihydroxid aufweisen. Im allgemeinen liegt die Konzentration an Alkalihydroxid in der Lösung im Bereich zwischen 10 und 70 Gew.-%, vorzugsweise zwischen 20 und 50 Gew.-% und besonders bevorzugt zwischen 30 und 50 Gew.-%. Zur Herstellung von Erdalkalicyaniden wird zweckmäßigerweise eine Erdalkalihydroxidsuspension mit einem Gehalt von weniger als 50 Gew.-%, insbesondere 5 bis 30 Gew.-% eingesetzt.

Bei dem im erfindungsgemäßen Verfahren einzusetzenden Cyanwasserstoff enthaltenden Gas kann es sich um reinen Cyanwasserstoff handeln oder um ein Cyanwasserstoff enthaltendes Gas, etwa ein solches, wie es als Reaktionsgas in üblichen Verfahren zur Herstellung von HCN erhalten wird oder wie es im Rahmen von anderen Prozessen, insbesondere dem Sohio-Prozeß zur Acrylnitrilherstellung als Nebenprodukt gebildet wird. Übliche Verfahren zur Herstellung von Cyanwasserstoff sind der Andrussow-Prozeß, der BMA-Prozeß und der Shawinigan-Prozeß (siehe Ullmann's Encyclopedia of Industrial Chemistry, 5th ed. (1987) Vol. A8, 161-163). Das im Andrussow-Prozeß, einer Ammonoxidation von Methan, gebildete Reaktionsgas (Rohgas) setzt sich typischerweise wie folgt zusammen (in Gew.-%): N₂ 53,7 %, H₂O 31,4 %, HCN 8,4 %, CO₂ 3,6 %, H₂ 1,1 %, NH₃ 1,0 %, CO 0,7 % und CH₄ 0,1 %. Das Rohgas aus dem BMA-Prozeß enthält demgegenüber als Hauptbestandteile HCN (ca. 23 Vol.-%) und H₂ (ca. 72 Vol.-%); daneben enthält das BMA-Rohgas noch Reste von nicht-umgesetztem Ammoniak und Methan und etwas Stickstoff. Auch das Rohgas des Shawinigan-Prozesses enthält als Hauptkomponenten HCN (ca. 25 Vol.-%) und H₂ (ca. 72 Vol.-%).

In erfindungsgemäßen Verfahren wird HCN in stöchiometrischem oder überstöchiometrischem Verhältnis, bezogen auf Alkalihydroxid beziehungsweise Erdalkalihydroxid eingesetzt. Üblicherweise liegt das Verhältnis von Mol HCN zu Äquivalent Metallhydroxid im Bereich von 1 bis 5. Zur Herstellung von NaCN- und KCN-Granulaten wird ein Molverhältnis HCN zu Alkalihydroxid von 1 bis 5, vorzugsweise 1 bis 1,5 und besonders bevorzugt 1 bis 1,1 eingesetzt.

Die Wirbelschichttemperatur liegt üblicherweise im Bereich von etwa 100 bis 250 °C. Im Prinzip kann das Verfahren auch bei einer Temperatur oberhalb von 250 °C durchgeführt, jedoch nimmt dann der Cyanidgehalt zunehmend ab. Im Prinzip kann die Wirbelschichttemperatur auch unterhalb 100 °C liegen, beispielsweise bei 90 bis 95 °C, wenn unter vermindertem Druck gearbeitet wird. Vorzugsweise liegt die Wirbelschichttemperatur zwischen 105 und 180 °C. Besonders bevorzugt liegt die Wirbelschichttemperatur zwischen 105 und 150 °C.

Das Fluidisierungsgas, das, wie zuvor dargestellt, auch bereits das HCN enthaltende Gas enthalten kann, weist zweckmäßigerweise eine Eingangstemperatur zwischen 110 und 500 °C, vorzugsweise eine solche zwischen 120 und 400 °C, auf.

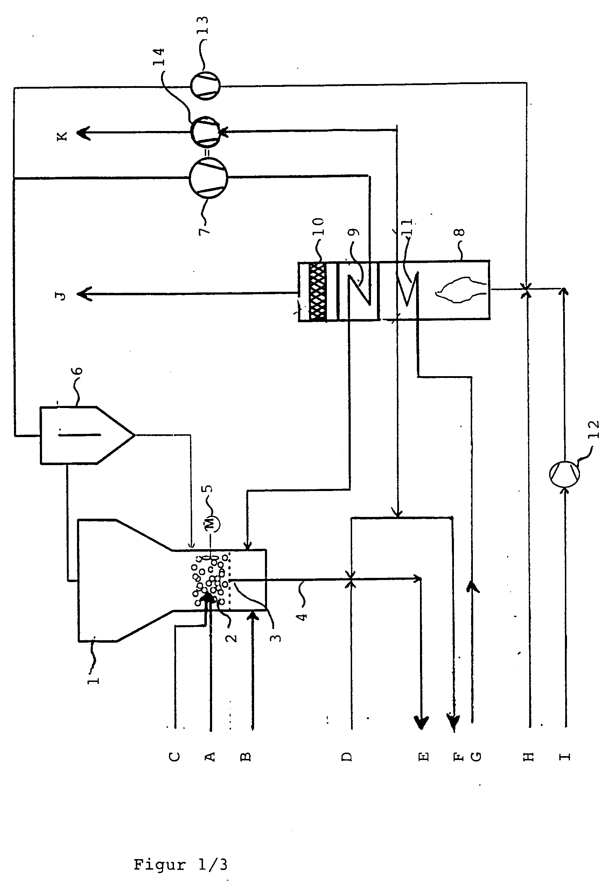

Als Fluidisierungsgas eignen sich im erfindungsgemäßen Verfahren inerte Gase, wie Stickstoff, besonders bevorzugt aber überhitzter Wasserdampf. Luft ist als Fluidisierungsgas nicht geeignet, da die für eine technische Anlage infragekommenden HCN-Luft-Gemische im explosiven Bereich liegen würden. (Im zuvor gewürdigten Verfahren der DE-A 38 32 883 wurde aus diesem Grund mit Stickstoff inertisiert). Bei der erfindungsgemaß besonders bevorzugten Ausführungsform unter Verwendung von trockenem Wasserdampf, kommt es bei einer Abgastemperatur oberhalb von 100 °C im trockenen Dampfbereich zu keiner Polymerisation nicht-umgesetzter Blausäure, so daß eine Anlagenschaltung mit einer Kreisgasführung möglich ist. Bei einer derartigen Ausführungsform wird der aus der Wirbelschicht austretende Gasstrom in zwei Teilströme aufgetrennt: Der erste Teilstrom (Kreisgasstrom) wird nach Wiederaufheizung erneut als Fluidisierungsgas eingesetzt; der zweite Teilstrom (Überschußgas) wird aus dem Kreislauf ausgeschleust. Der Wasserdampfanteil des Kreisgases wird durch das Reaktionswasser und die Lösungstrocknung im Prozeß geliefert. Durch die Kreisgasführung reduziert sich der Aufwand für die Abgasbehandlung erheblich, weil der Überschuß an Dampf vollständig kondensiert werden kann und nur die flüchtigen Gasbestandteile einer weiteren Behandlung zugeführt werden müssen. Weitere Ausführungsformen des erfindungsgemäßen Verfahrens werden anhand der Figuren 1 bis 3 erläutert.

Figur 1 zeigt ein Verfahrensschema zur Herstellung eines Alkalicyanid-Granulats unter Einsatz eines BMA-Reaktionsgases nach der erfindungsgemäßen Reaktionswirbelschichtgranulation (RWG) mit Kreisgasführung und Verbrennung des Überschußgases.

Figur 2 zeigt ein Verfahrensschema für eine alternative Ausführungsform des RWG-Prozesses, wobei die Staubabscheidung im Reaktor integriert ist, Überschußdampf kondensiert und Abgas gewaschen wird.

Figur 3 zeigt ein Verfahrensschema einer Laborapparatur zur Durchführung des erfindungsgemäßen Verfahrens, wobei der Andrussow-Prozeß simuliert, das Andrussow-Reaktionsgas durch Eindüsen von Wasser gequencht und das erhaltene Gasgemisch als HCN enthaltendes Fluidisierungsgas dem Reaktor des RWG-Prozesses zugeführt und das Abgas über einen Wäscher abgesaugt wird.

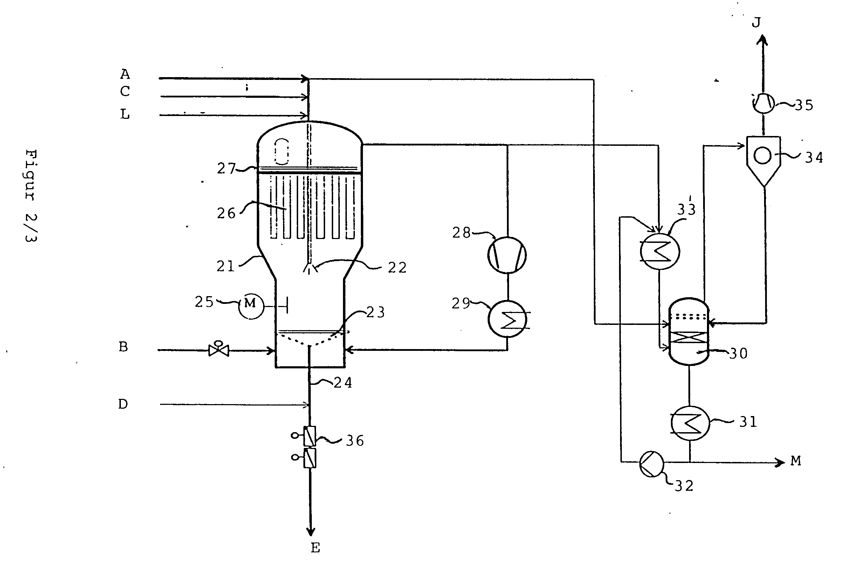

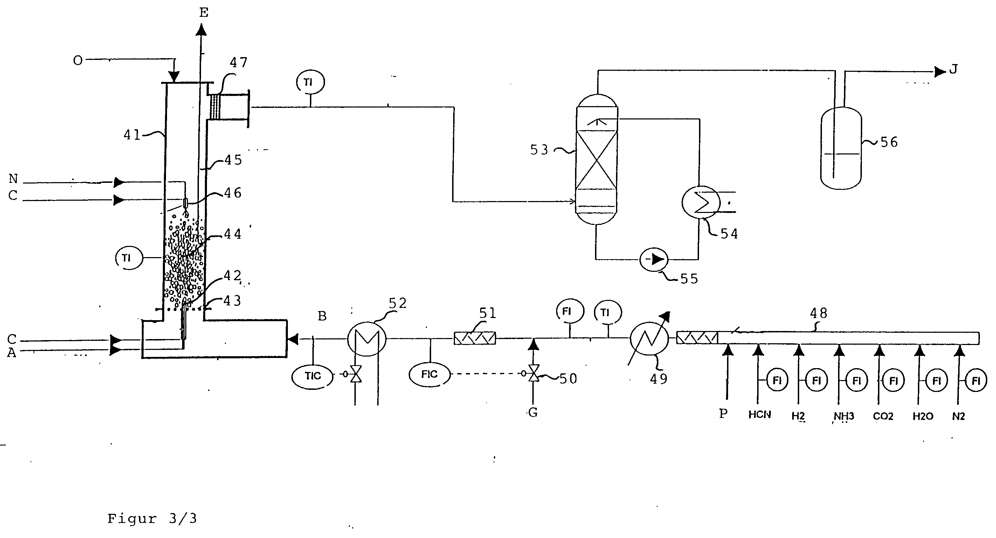

Figur 1 umfaßt die Bezugsziffern 1 bis 14, Figur 2 die Bezugsziffern 21 bis 35 und Figur 3 die Bezugsziffern 41 bis 56. In das System ein- und austretende Stoffströme sind einheitlich mit Buchstaben gekennzeichnet: A Alkalilauge, B HCN enthaltendes Gas, C Treibgas für Zweistoffdüse, D Klassiergas, E Alkalicyanidgranulat, F Überschußdampf, G Wasser zur Dampferzeugung, H Brenngas (zum Anfahren), I Verbrennungsluft, J Abgas, K Abdampf, L Spülgas, K Abdampf, L Spülgas, M Abwasser, N Alkalicyanidlösung, O Keime, P Wasserdampf.

Die in Figur 1 dargestellte Ausführungsform eignet sich insbesondere dann, wenn HCN enthaltende Gase mit hohem Brennstoffanteil eingesetzt werden, insbesondere also HCN und Wasserstoff enthaltende Gase, wie sie im BMA-Prozeß und Shawinigan-Prozeß erhältlich sind. In diesem Fall kann das Abgas direkt einer Verbrennung zugeführt werden, die gleichzeitig die Wärme zur Aufheizung des Kreisgases liefert. Bei der kontinuierlich betriebenen Reaktionswirbelschichtgranulation wird eine Alkalilauge (A) mittels Ein- oder Mehrstoffdüsen (2) in die Wirbelschicht im RWG-Reaktor (1) versprüht. Sofern eine Zweistoffdüse zum Einsatz kommt, kann es sich bei dem Treibgas (C) entweder um ein Inertgas, beispielsweise Stickstoff, oder um ein HCN enthaltendes Gas handeln. Die für den Betrieb erforderlichen Keime werden zu Beginn dem Reaktor zugesetzt; im Betriebszustand bilden diese Keime die Wirbelschicht (in der Figur als kleine Kugeln dargestellt). Während des Betriebs läßt sich die Keimzahl mittels eines in der Wirbelschicht angeordneten Schlagwerks (5) steuern. Wenn das Granulat auf die Zielkorngröße gewachsen ist, wird es mittels eines klassierenden Abzugs (4) aus dem Reaktor abgezogen (E); der nicht im Detail dargestellten Klassiervorrichtung wird ein Klassiergas (G) zugeführt. Die Zugabe des HCN-Rohgases aus einem BMA-Prozeß (B) erfolgt unterhalb des Wirbelschichtbodens (3), jedoch kann alternativ hierzu oder in Ergänzung das HCN enthaltende Gas auch als Treibgas (C) verwendet oder unmittelbar in die Wirbelschicht eingeleitet werden (nicht dargestellt). Der feststoffbeladene Abgasstrom wird in einem Abscheider (6) gereinigt; die abgeschiedenen Feststoffe werden in den Reaktor rezykliert. Der von Feststoffen befreite Abgasstrom wird in zwei Teilströme aufgetrennt, und zwar in einen ersten Teilstrom, auch Kreisgasstrom genannt, und einen zweiten Teilstrom, welcher das Überschußgas enthält. Der Kreisgasstrom wird mittels eines Kreisgasgebläses (7) über einen in einer Brennkammer (8) angeordneten Überhitzer (9) wieder dem RWG-Reaktor (1) zugeführt. Das Überschußgas wird mittels eines Gebläses (13) abgesaugt, wodurch diese Anlagenvariante unter geringem Unterdruck betrieben wird. Das vom Gebläse (13) angesaugte brennstoffreiche Überschußgas wird der Brennkammer (8) zugeführt; durch Verbrennung wird die Wärme für die Kreisgasüberhitzung (9) geliefert. Zur Inbetriebnahme und/oder zur Ergänzung kann zusätzlich ein Brenngas (H) der Brennkammer zugeführt werden; Verbrennungsluft (I) wird über ein Gebläse (12) der Brennkammer zugeführt. Die Brennkammer selbst weist zusätzlich einen Katalysator (10) auf, um das Abgas (J) zu entsticken. Je nach Durchsatzleistung im Reaktor und Brennwert des HCN enthaltenden Gases fällt ein Überschuß an Energie an, der z. B. für eine zusätzliche Dampferzeugung genutzt werden kann - Zufuhr von Wasser (G) zur Brennkammer und Verdampfung desselben im Überhitzer (11). Der zusätzlich gebildete Dampf kann zum Betrieb einer Dampfturbine (14), welche das Kreisgasgebläse (7) antreibt, genutzt werden; Abdampf (K) wird von der Dampfturbine abgezogen. Des weiteren kann der zusätzlich gebildete Dampf als Klassiergas oder für andere Zwecke (F) genutzt werden.

Die in Figur 2 dargestellte Vorrichtung zur Reaktionswirbelschichtgranulation eignet sich insbesondere zur Herstellung feinkörniger, aber staubarmer Granulate. Der Reaktor (21) umfaßt eine oder mehrere Sprühdüsen (22), den Wirbelschichtboden (23), eine Vorrichtung zum klassierenden Abzug ((24) in Verbindung mit der Klassiergaszufuhr (D)) des Granulats (E), ein Schlagwerk (25) zur Zerkleinerung der Granulate, im Reaktor integrierte Filterschläuche (26) und eine nicht im Detail dargestellte JET-Vorrichtung (27) mittels welcher in Verbindung mit einer Zufuhr von Spülgas (L) die Filterschläuche abgereinigt werden. Unterhalb des Wirbelschichtbodens wird ein HCN enthaltendes Gas (B) eingeleitet; eine wäßrige Alkalihydroxidlösung (A) wird unter Verwendung eines Treibgases (C) mittels Zweistoffdüsen (22) auf die Wirbelschicht (in Fig. 2 nicht dargestellt) aufgesprüht. Das den Reaktor verlassende entstaubte Gas wird wieder in zwei Teilströme aufgetrennt. Der Kreisgasstrom (erster Teilstrom) wird mit dem Gebläse (28) über einen Erhitzer (29) wieder in den Reaktor (21) gefördert. Die aus dem Gaskreislauf ausgeschleusten Überschußbrüden (zweiter Teilstrom) werden einem Wärmetauscher (33) zugeführt, worin Wasserdampf der Überschußbrüden kondensiert wird. Restgase an nichtumgesetzter Blausäure werden im Wäscher (30) mit Alkalilauge (A) neutralisiert und im Abwasser (M) zur weiteren Behandlung abgeführt. Der Wäscherkreislauf umfaßt einen weiteren Wärmetauscher (31) sowie eine Kreislaufpumpe (32). Die flüchtigen Bestandteile aus dem Wäscher werden über einen Tropfenabscheider (34) geleitet und über ein Abgasgebläse (35) einer Verbrennungsanlage zugeführt. Das Abgasgebläse (35) stellt den Druck in der Anlage ein. Das Alkalicyanid-Granulat wird über eine Schleuse (36) aus dem Reaktor abgeführt.

In dem in Figur 3 dargestellten Verfahren wird der Andrussow-Prozeß und die Reaktionswirbelschichtgranulation über die Kühlung des Andrussow-Rohgases gekoppelt. Im Andrussow-Prozeß wird bekanntlich ein Gemisch aus Methan-Ammoniak und Luft in einem Reaktor über Katalysatornetze geleitet und bei einer sich nach der Zündung einstellenden Temperatur von über 1000 °C zu Cyanwasserstoff und Wasser umgesetzt. Eine typische Zusammensetzung des Reaktionsgasgemisches wurde zuvor angegeben. Zur Vermeidung von HCN-Zersetzungen muß das Reaktionsgas schnell unter 400 °C abgekühlt werden. Das wird dadurch erreicht, daß unmittelbar nach der Reaktion in dem Reaktor-Quenchwasser eingedüst oder/und die Wärme in einem Abhitzekessel abgeführt wird. Während üblicherweise beim Quenchen Energie verloren geht, wurde überraschenderweise gefunden, daß sich die Betriebsparameter des RWG-Prozesses und des Andrussow-Prozesses so aufeinander abstimmen lassen, daß eine direkte Kopplung der Prozesse über das Reaktionsgas möglich wird. Zu diesem Zweck wird das abgekühlte Andrussow-Reaktionsgas direkt als Fluidisierungsgas in den RWG-Reaktor eingesetzt. Der Cyanwasserstoff liegt dabei schon im Fluidisierungsgasstrom vor und bestimmt den in die Wirbelschicht einzusprühenden Mengenstrom an Alkalihydroxidlösung. Durch die Art und Weise der Abkühlung des Reaktionsgases kann man die Wärme- und Stoffmengen des Fluidisierungsgasstromes exakt auf die Reaktionswirbelschicht abstimmen und regeln.

Wie zuvor dargestellt, wird das Andrussow-Gas üblicherweise durch Quenchen und/oder in direktem Wärmeaustausch abgekühlt. Bei der erfindungsgemäßen Kopplung des Andrussow-Prozesses mit dem RWG-Prozeß wird der Kühlprozeß für die Einstellung der Prozeßbedingungen in der Reaktionswirbelschicht ausgenutzt. Zur Einstellung einer Gaseintrittstemperatur in den RWG-Reaktor von vorzugsweise unter 400 °C kann durch die Quenchwassermenge der Massenstrom des Fluidisierungsgases und damit die Fluidisierungsgeschwindigkeit in der Wirbelschicht beeinflußt werden. Je größer dabei der Anteil der Abkühlung durch Quenchen ist, umso kleiner muß die indirekte Wärmeabfuhr durch Wärmeaustauscher sein und umgekehrt. Somit ist eine einfache Regelung der Prozeßbedingungen in der Wirbelschicht möglich. Es ist auch möglich, auf einen indirekten Wärmeaustauscher vollständig zu verzichten und allein durch Quenchen des Andrussow-Reaktionsgases die gewünschte Fluidisierungsgastemperatur einzustellen.

Da einerseits die Energiezufuhr zum RWG-Reaktor über die Art der Abkühlung des Reaktionsgases aus dem Andrussow-Reaktor eingestellt werden kann, indem z. B. der Massenstrom durch die Quenchwassermenge variiert und die Gastemperatur durch den Abhitzekessel konstant gehalten wird und andererseits die Leistung des RWG-Reaktors ein Maß der Temperaturdifferenz zwischen der Gaseintrittstemperatur und der Abgastemperatur ist, stellt sich bei einem gegebenen HCN-Umsatz und entsprechender Eindüsung an Alkalilauge eine Abgastemperatur ein. Es wurde gefunden, daß der RWG-Prozeß in einem breiten Temperaturbereich der Abgastemperatur betrieben werden kann; vorzugsweise liegt die Abgastemperatur, welche geringfügig höher ist als die Wirbelschichttemperatur, im Bereich zwischen 100 und 200 °C. Wenn die Abkühlung des Andrussow-Reaktionsgases überwiegend oder vollständig durch Quenchen erzielt wird, so stellt sich infolge des hohen Massenstromes an Gas eine hohe Abgastemperatur ein. Die dadurch vorhandene Leistungsreserve des RWG-Reaktors kann dadurch genutzt werden, daß zusätzlich zur Alkalihydroxidlauge auch Alkalicyanidlauge in den Reaktor eingesprüht wird. Diese Alkalicyanidlauge kann beispielsweise aus einer Abgaswäsche eines HCN enthaltenden Prozeßgases stammen.

Eine weitere Ausführungsform (in Fig. 3 nicht gezeigt) der erfindungsgemäßen Kopplung zwischen dem Andrussow-Prozeß und dem RWG-Prozeß besteht darin, daß ein Teil des RWG-Abgases nach einer Heißgasfiltration zwecks Abtrennung von Staub in den Andrussow-Reaktor rezykliert wird. Durch diese Rezyklierung wird eine Ausbeuteverbesserung des Prozesses erzielt. Bei dieser Prozeßführung wird zwar die HCN-Konzentration im Reaktionsgas verringert, jedoch ist dies nachteilig, da dann auf die Eindüsung von Wasser in den Reaktionsstrom verzichtet werden kann, weil durch den im Kreis geführten Teilgasstrom der Massenstrom für die Fluidisierung und für den Wärmeeintrag in den RWG-Reaktor erhöht wird. Die notwendige Abkühlung des Reaktionsgases des Andrussow-Reaktors kann dann allein oder überwiegend durch einen indirekten Wärmeaustauscher erfolgen.

Das Reaktionsgas des Andrussow-Prozesses läßt sich auch auf eine parallele Laugen- und Feststoffproduktion aufsplitten, indem ein Teilstrom durch den RWG-Reaktor geleitet und der Reststrom direkt einer Laugenproduktion zugeführt wird. Vorteilhaft läßt sich das Abgas des RWG-Reaktors, das Reste aus Cyanwasserstoff und Alkalicyanidstaub enthalten kann, mit dem anteiligen Gasstrom, der zur Laugenproduktion führt, mischen. So kann die Abgasbehandlung des RWG-Reaktors minimiert werden oder ganz entfallen. Durch diese Aufspaltung des Gases wird eine hohe Flexibilität im Produktmix von Lauge und Granulat erhalten.

Beim Einsatz von Andrussow-Gas als HCN-Quelle im RWG-Verfahren kommt es aufgrund des CO₂-Gehalts des Andrussow-Gases auch zur Bildung von Alkalicarbonat. Vor der eigentlichen Konkurrenzreaktion müssen aber die Gase HCN und CO₂ in die Alkalihydroxidlösung, mit welcher die Keime benetzt sind, diffundieren: HCN diffundiert viel besser als CO₂, so daß nur ein Teil des eingebrachten CO₂ vor dem Trocknen des Korns zur Umsetzung gelangen kann. Der Gehalt an Alkalicarbonat im erfindungsgemäß erzeugten Alkalicyanid-Granulat ist daher wesentlich niedriger als im Falle der Herstellung eines Granulats durch Absorption des Andrussow-Gases in einer Alkalilauge mit nachfolgender Wirbelschicht-Sprühgranulation der Alkalicyanidlauge, welche ohne zusätzliche Reinigungsmaßnahme die gesamte Menge CO₂ des Andrussow-Gases als Alkalicarbonat enthalten würde.

Bei der in Figur 3 dargestellten Laborapparatur wurde nicht Gas eines Andrussow-Reaktors eingesetzt, sondern eine typische Andrussow-Gaszusammensetzung durch Mischen der einzelnen Bestandteile in einer Mischstrecke (48) und Aufheizen des Gasgemischs in einem Heizaggregat (49) synthetisch erzeugt - ausschließlich aufgrund von Versuchsbedingungen wurde Kohlenoxid durch Stickstoff ersetzt und zusätzlich eine größere Menge Wasserdampf (P) zugesetzt, um das Gasgemisch nicht zu hoch aufheizen zu müssen. In das auf 650 °C geheizte Gasgemisch wird Wasser (G) eingedüst und in der Mischstrecke (51) verdampft; die Wassermenge wird durch eine Volumenstrommessung des Reaktionsgases geregelt (50). Über einen indirekten Wärmeaustauscher (52) wird eine konstante Temperatur des Reaktionsgases zwischen 350 und 380 °C eingestellt. Das Gas wird in den Unterteil des RWG-Reaktors (41) eingeleitet und strömt durch ein Lochblech (43) in die Wirbelschicht (44). Alkalihydoxidlösung (A) wird mittels einer von unten zentrisch durch das Lochblech geführten Zweistoffdüse unter Verwendung von Stickstoff als Treibgas (C) von unten nach oben in die Wirbelschicht versprüht. In dem Reaktor, dessen Verhältnis Höhe zu Durchmesser etwa 30 betrug, war eine weitere Zweistoffdüse (46) angeordnet, womit alternativ Alkalihydroxidlauge oder Alkalicyanidlauge von oben nach unten in die Wirbelschicht eingesprüht werden konnte. Zu Beginn der Versuche werden die Wirbelschicht bildenden Keime (O) in den Reaktor eingetragen, das Granulat (E) nach Abbruch des Versuchs mittels eines Rohres (45) abgesaugt. Am Oberteil des Reaktors wird das Abgas nach Passage eines Filters (47) über einen Wäscher (53) abgesaugt. Der Waschkreislauf umfaßt also den Wäscher, die Pumpe (55) und einen Wärmeaustauscher (54). Nach einem Tropfenabscheider (56) tritt das Abgas (J) aus.

Durch das erfindungsgemäße Verfahren lassen sich unter Einsatz eines CO₂-armen, vorzugsweise im wesentlichen CO₂-freien HCN enthaltenden Gases, etwa eines BMA-Rohgases, Alkalicyanide mit einer besonders vorteilhaften Eigenschaftskombination der Granulate sowie einer außergewöhnlich hohen Reinheit herstellen. Gefunden wurde demgemäß ein Alkalicyanid-Granulat auf der Basis von Natriumcyanid oder Kaliumcyanid, umfassend die Stoffdaten:
(i) im wesentlichen kugelförmige Teilchen mit glatter oder himbeerförmiger Oberflächenstruktur,
(ii) Teilchendurchmesser im Bereich von 0,1 bis 20 mm, vorzugsweise 1 bis 20 mm, für 99 Gew.-% des Granulats,
(iii) Schüttgewicht von mindestens 600 g/dm³, vorzugsweise größer 650 g/dm³,
(iv) Abrieb von weniger als 1 Gew.-%, gemessen im Roll-Abriebtest (Abriebtester TAR der Fa. Erweka mit 20 g Probe, 60 min, 20 U/min)
(v) Verbackungsindex von maximal 4, vorzugsweise 3 und kleiner als 3, gemessen nach 14-tägiger Belastung von 100 g in einem Zylinder der lichten Weite von 5,5 cm mit 10 kg,
das dadurch gekennzeichnet ist, daß der Gehalt an Alkalicarbonat kleiner als 0,5 Gew.-% und der Gehalt an Alkaliformiat kleiner als 0,3 Gew.-% ist, wobei das Alkalimetall in den genannten Nebenprodukten identisch ist mit jenem des Alkalicyanids.

Bevorzugte Granulate enthalten Alkalicarbonat und Alkaliformiat in einer Menge von zusammen weniger als 0,4 Gew.-%. Besonders bevorzugte NaCN- und KCN-Granulate enthalten weniger als 0,1 Gew.-% Alkalicarbonat und weniger als 0,1 Gew.-% Alkaliformiat. Alkalicyanidgranulate mit dem genannten, sehr niedrigen Gehalt an Nebenprodukten aus der Reihe Alkalicarbonat und Alkaliformiat lassen sich insbesondere durch eine solche Ausführungsform des erfindungsgemäßen Verfahrens herstellen, in welchem ein HCN enthaltendes Reaktionsgas eingesetzt wird, das im wesentlichen frei von Kohlendioxid ist und als Fluidisierungsgas Wasserdampf verwendet wird.

Alkalicyanid-Granulate mit den Merkmalen (i) bis (v) lassen sich, wie aus der EP-A 0 600 282 bekannt ist, durch direkte Wirbelschicht-Sprühgranulation einer Alkalicyanidlösung herstellen. Bezüglich der Definition und Bestimmungsmethoden dieser Merkmale wird ausdrücklich auf das genannte Dokument verwiesen. Im Unterschied zum erfindungsgemäßen Verfahren unter Einsatz eines im wesentlichen CO₂-freien HCN enthaltenden Gases werden im vorbekannten Verfahren stets Produkte erhalten, welche einen hohen Alkalicarbonatgehalt aufweisen und somit in der Galvanotechnik kaum Einsatz finden können. Dieses Problem wird durch die Erfindung gelöst.

Außer der Zugänglichkeit von Alkali- und Erdalkalicyanid-Granulaten mit besonders vorteilhafter Eigenschaftskombination zeichnet sich das erfindungsgemäße Verfahren durch weitere Vorteile aus: Das Verfahren ist durch eine besonders hohe Raum-Zeit-Ausbeute und einen niedrigen energetischen Aufwand gekennzeichnet. Durch das Verfahren ist es möglich geworden, die teilweise aufwendige und zu Nebenprodukten führende separate Herstellung einer Alkalicyanid- beziehungsweise Erdalkalicyanid-Lösung zu verzichten. Dies führt zu einer deutlich verringerten Investition einer technischen Anlage. Das Verfahren erlaubt es, unterschiedliche Quellen HCN enthaltender Gase einzusetzen, darunter BMA-Reaktionsgas und Andrussow-Reaktionsgas. In Abhängigkeit vom eingesetzten HCN enthaltenden Gas geben sich für das Verfahren unterschiedliche Varianten, die sowohl zu einer hohen Flexibilität als auch zu einem niedrigen Energieverbrauch führen. Weitere Vorteile bestehen darin, daß sowohl ein BMA- als auch ein Andrussow-Reaktionsgas, so wie es aus dem entsprechenden Reaktor mit einer Temperatur von über 1000 °C anfällt, in erfindungsgemäßen Verfahren eingesetzt werden kann, wobei die erforderliche Abkühlung des Reaktionsgases entweder durch Einspeisen desselben in einen Gaskreislauf oder/und durch Quenchen mit Wasser erzielt werden kann.

Durch die direkte Kopplung des Andrussow- mit dem RWG-Prozeß wird die Wirtschaftlichkeit zur Herstellung von festen Alkalicyanid-Granulaten deutlich verbessert. Die Energie des Reaktionsgases aus dem Andrussow-Reaktor wird direkt zur Wasserverdampfung des mit der Alkalihydroxidlösung eingebrachten sowie des bei der Neutralisation gebildeten Wassers verwendet, ohne über indirekte Wärmeaustauscherapparate transportiert zu werden. Für das Fluidisierungsgas der Wirbelschicht werden keine Fördermaschinen und separate Heizsysteme benötigt. Überschüssige Energie kann zusätzlich genutzt werden, um parallel zum erfindungsgemäßen Prozeß zusätzlich eine Alkalicyanidlösung im Reaktionswirbelschichtgranulator zwecks Granulatbildung zu versprühen.

### Beispiele 1 und 2

NaCN-Granulate wurden hergestellt aus Natronlauge und BMA-Rohgas nach dem erfindungsgemäßen RWG-Verfahren in einer Vorrichtung und unter Bedingungen wie sie zuvor bei Figur 1 beschrieben wurden.

| | |
|---|---|
| Bodendurchmesser des RWG-Reaktors: | 250 mm |
| Fluidisierungsgas: | Kreisgas mit H₂O-Dampf |
| Temperatur: | 270 °C |
| Menge: | 10 m³/h |
| BMA-Gas-Zufuhr: | Unterhalb des Anströmbodens |
| Temperatur: | 150 °C |
| Menge: | 1,09 kg/h HCN |
| NaOH-Lauge (35 Gew.-%): | 2,33 kg/h |
| Abgastemperatur *): | 105 °C - Beispiel 1 |
| | 110 °C - Beispiel 2 |

| | |
|---|---|
| *) Die Temperatur in der Wirbelschicht lag etwa 10 °C oberhalb der Abgastemperatur. | |

Erhalten wurden in beiden Beispielen im wesentlichen kugelförmige Granulate mit glatter Oberfläche mit einem Teilchendurchmesser im Bereich von 4 bis 5 mm, einem Schüttgewicht im Bereich von 700 bis 750 g/l, einem Abrieb von weniger als 0,1 Gew.-% und einem Verbackungsindex von unter 3.

Die chemische Zusammensetzung folgt aus der Tabelle:

| | Beispiel 1 | Beispiel 2 |
|---|---|---|
| Abgastemperatur (°C) | 105 | 110 |
| NaCN | 98,30 | 98,07 |
| NaOH | 1,01 | 1,12 |
| Na₂CO₃ | 0,18 | 0,08 |
| Na-formiat | 0,18 | 0,11 |
| H₂O | 0,33 | 0,62 |

Der Natriumformiatgehalt resultierte im wesentlichen aus der Keimvorlage: Die eingesetzten NaCN-Keime wiesen einen mittleren Korndurchmesser von 2 mm auf und enthielten 0,72 % Na₂CO₃ und 0,70 % HCOONa.

### Beispiel 3

In einer Vorrichtung gemäß Figur 2 wurde KCN-Granulat aus Kalilauge (40 Gew.-%) und HCN-Gas aus einem BMA-Reaktor in typischer BMA-Zusammensetzung hergestellt.

| | |
|---|---|
| Wirbelschichttemperatur: | 107 °C |
| Kreisgas Menge: | 10 m³/h |
| Eingangstemperatur des Kreisgases: | 150 °C |
| Molverhältnis HCN/KOH: | 1,08 |

Erhalten wurde kugelförmiges Granulat mit einem Schüttgewicht von 700 bis 750 g/l, das völlig staubfrei und abriebfest sowie nicht verbackend war.

Die Analyse lautete:

| | |
|---|---|
| KCN | 99,1 % |
| KOH | 0,2 % |
| K₂CO₃ | 0,1 % |
| HCOOK | 0,1 % |
| H₂O | 0,5 % |

### Beispiel 4

Das erfindungsgemäße Verfahren wurde in der in Figur 3 dargestellten Laboranlage und unter den beschriebenen Bedingungen durchgeführt. Beispiel 4 sowie die Beispiele 5 und 6 umfassen die Kopplung des Andrussow-Prozesses mit dem RWG-Prozeß.

Die Andrussow-Gaszusammensetzung wurde durch Mischen von HCN, H₂, NH₃, CO₂, H₂O und N₂ simuliert. Um den inerten CO-Anteil eines Andrussow-Gases wurde der Stickstoffanteil erhöht. Zusätzlich wurden über den Strom P ca. 3 bis 4 kg/h Wasserdampf beigemischt, so daß der Gesamtstrom ca. 18 bis 19 kg/h betrug. Das Gasgemisch wurde im Heizaggregat (49) auf ca. 650 °C aufgeheizt und anschließend zur Simulierung der Quenche durch Einsprühen von 3 bis 4 kg/h Wasser (G) wieder gekühlt, so daß der in den RWG-Reaktor eintretende Mengenstrom ca. 21 bis 23 kg/h betrug. Über den indirekten Wärmetauscher (52) wurde eine Gastemperatur von ca. 350 °C geregelt und auf diesem Niveau in den RWG-Reaktor eingeleitet. Die Düse (42) wurde mit 50 %iger vorgewärmter Natronlauge gespeist; gesprüht wurde von unten nach oben. Als Treibmittel wurde vorgeheizter Stickstoff verwendet. In den Reaktor wurden 1,5 kg NaCN-Granulat mit einer Körnung von 0,2 bis 0,3 mm vorgelegt. Das Granulat wurde vorgewärmt und anschließend die Gasmischung gestartet. Dann erfolgte die Natronlaugezugabe im nahezu stöchiometrischen Verhältnis zum HCN-Anteil. Im Abgasstrom wurden im stationären Zustand Temperaturen zwischen 105 bis 125 °C gemessen. Aus dem Reaktor wurden ca. 4 kg Granulat abgesaugt. Das Produkt enthielt 92,3 % NaCN. Der Rest war überwiegend NaOH, Soda und Restfeuchte.

### Beispiel 5

Gasseitig wurden die gleichen Bedingungen wie in Beispiel 4 eingestellt. Der Wärmetauscher (52) wurde nicht betrieben und dafür die Quenchwassermenge (G) auf 4 bis 4,5 kg/h erhöht, so daß eine Gaseintrittstemperatur in den RWG-Apparat von ca. 380 °C vorlag. Bei vergleichbaren Mengen an eingedüster Natronlauge stellte sich im Abgas eine Temperatur zwischen 105 und 145 °C ein.

### Beispiel 6

Die Versuchsbedingungen wurden wie in Beispiel 4 eingestellt. Zusätzlich wurde über die Düse (46) eine 20 %ige Natriumcyanidlauge versprüht. Der Feed an der Düse (46) wurde langsam erhöht, bis die Abgastemperatur auf ca. 110 °C abgesenkt war. In diesem Zustand ließen sich bis 0,4 kg/h der 20 %igen Cyanidlauge zusätzlich einsprühen. Der Cyanidgehalt des Produktes lag bei 95 %.

## Patentansprüche

1. Verfahren zur Herstellung eines Alkalicyanid- oder Erdalkalicyanid-Granulats, umfassend eine Umsetzung von Cyanwasserstoff mit einem Alkali- oder Erdalkalihydroxid, wobei das Alkalihydroxid in Form einer wäßrigen Lösung und das Erdalkalihydroxid in Form einer wäßrigen Suspension in einen Reaktor eingesprüht und dort mit gasförmigem Cyanwasserstoff umgesetzt wird, und Verdampfen von in den Reaktor eingebrachtem und gebildetem Wasser,
dadurch gekennzeichnet,
daß man die Umsetzung in einem Reaktor zur Wirbelschicht-Sprühgranulation bei einer Wirbelschichttemperatur im Bereich von 100 bis 250 °C durchführt, die genannte Lösung oder Suspension auf eine Wirbelschicht aus Keimen aus dem herzustellenden Alkali- oder Erdalkalicyanid aufsprüht, gleichzeitig dem Reaktor ein Cyanwasserstoff enthaltendes Gas in einer Menge von mindestens einem Mol HCN pro Metalläquivalent zuführt und das Wasser mittels eines durch die Wirbelschicht strömenden Fluidisierungsgases, dessen Eingangstemperatur zwischen 110 und 500 °C liegt, verdampft.

2. Verfahren nach Anspruch 1,
dadurch gekennzeichnet,
daß man als Cyanwasserstoff enthaltendes Gas ein als Hauptbestandteile Cyanwasserstoff und Wasserstoff enthaltendes Reaktionsgas aus einem BMA- oder Shawinigan-Prozeß einsetzt.

3. Verfahren nach Anspruch 1,
dadurch gekennzeichnet,
daß man als Cyanwasserstoff enthaltendes Gas ein als Hauptbestandteile HCN, N₂, H₂, H₂O und CO enthaltendes Reaktionsgas aus einem Andrussow-Prozess einsetzt.

4. Verfahren nach einem der Ansprüche 1 bis 3,
dadurch gekennzeichnet,
daß man NaCN- oder KCN-Granulat herstellt, wobei das Molverhältnis von HCN zu NaOH oder KOH im Bereich zwischen 1 und 5 liegt und die Konzentration der zu versprühenden Alkalihydroxidlösung 10 bis 70 Gew.-% beträgt.

5. Verfahren nach einem der Ansprüche 1 bis 4,
dadurch gekennzeichnet,
daß man das Cyanwasserstoff enthaltende Gas unterhalb des Wirbelschichtbodens dem Fluidisierungsgasstrom zumischt und/oder im Bereich der Wirbelschicht in den Reaktor einführt.

6. Verfahren nach einem der Ansprüche 1 bis 5,
dadurch gekennzeichnet,
daß man die Umsetzung bei einer Wirbelschichttemperatur im Bereich von 105 bis 180 °C und einer Eingangstemperatur des Fluidisierungsgases im Bereich von 120 bis 400 °C durchführt.

7. Verfahren nach einem der Ansprüche 1 bis 6,
dadurch gekennzeichnet,
daß man als Fluidisierungsgas überhitzten Wasserdampf oder ein überhitzten Wasserdampf enthaltendes Gasgemisch verwendet.

8. Verfahren nach einem der Ansprüche 1 bis 7,
dadurch gekennzeichnet,
daß man den aus der Wirbelschicht austretenden Gasstrom in zwei Teilströme auftrennt, den ersten Teilstrom wieder aufheizt und erneut als Fluidisierungsgas einsetzt und den zweiten Teilstrom (Überschußgas) aus dem Kreislauf ausschleust.

9. Verfahren nach Anspruch 8,
dadurch gekennzeichnet,
daß man dem ersten Teilstrom vor oder nach dem Aufheizen desselben ein Cyanwasserstoff enthaltendes Gas zumischt und das Gasgemisch als Fluidisierungsgas verwendet.

10. Verfahren nach Anspruch 9,
dadurch gekennzeichnet,
daß man dem ersten Teilstrom ein HCN und H₂ enthaltendes Reaktionsgas eines BMA-Prozesses oder Shawinigan-Prozesses mit einer Temperatur im Bereich von 1000 bis 1500 °C zusetzt, wobei das Reaktionsgas abgekühlt und der erste Teilstrom aufgeheizt wird, und das erhaltene Gasgemisch als Fluidisierungsgas verwendet.

11. Verfahren nach Anspruch 3,
dadurch gekennzeichnet,
daß man das einen Reaktor des Andrussow-Prozesses mit einer Temperatur von oberhalb 1000 °C verlassende HCN enthaltende Reaktionsgas durch Eindüsen von Wasser abschreckt und dabei auf eine Temperatur im Bereich von 150 bis 500 °C abkühlt und das erhaltene Gasgemisch als Fluidisierungsgas verwendet.

12. Verfahren nach Anspruch 11,
dadurch gekennzeichnet,
daß man ein NaCN- oder KCN-Granulat herstellt, indem man zusätzlich zur NaOH- oder KOH-Lösung eine NaCN oder KCN enthaltende wäßrige Lösung auf die Keime aufsprüht, wobei die NaCN- oder KCN-Lösung eine solche aus einer Abgaswäsche des aus dem Reaktor zur Wirbelschicht-Sprühgranulation austretenden Abgasstromes umfassen kann.

13. Verfahren nach Anspruch 11 oder 12,
dadurch gekennzeichnet,
daß man den aus dem Reaktor zur Wirbelschicht-Sprühgranulation austretenden Abgasstrom in zwei Teilströme auftrennt, den ersten Teilstrom nach Abtrennung von Staub in den Andrussow-Reaktor rezykliert und den zweiten Teilstrom aus dem Kreislauf ausschleust.

14. Alkalicyanid-Granulat auf der Basis von Natriumcyanid oder Kaliumcyanid, umfassend die Stoffdaten:
(i) im wesentlichen kugelförmige Teilchen mit glatter oder himbeerförmiger Oberflächenstruktur,
(ii) Teilchendurchmesser im Bereich von 0,1 bis 20 mm für 99 Gew.-% des Granulats,
(iii) Schüttgewicht von mindestens 600 g/dm³,
(iv) Abrieb von weniger als 1 Gew.-%, gemessen im Roll-Abriebtest (Abriebtester TAR der Fa. Erweka mit 20 g Probe, 60 min, 20 U/min)
(v) Verbackungsindex von maximal 4, gemessen nach 14-tägiger Belastung von 100 g in einem Zylinder der lichten Weite von 5,5 cm mit 10 kg,
dadurch gekennzeichnet,
daß der Gehalt an Alkalicarbonat kleiner als 0,5 Gew.-% und der Gehalt an Alkaliformiat kleiner als 0,3 Gew.-% ist, wobei das Alkalimetall in den genannten Nebenprodukten identisch ist mit jenem des Alkalicyanids.

15. Alkalicyanid-Granulat nach Anspruch 14,
dadurch gekennzeichnet,
daß die Summe aus Alkalicarbonat und Alkaliformiat kleiner 0,4 Gew.-% ist.

16. Alkalicyanid-Granulat nach Anspruch 14 oder 15,
dadurch gekennzeichnet,
daß es erhältlich ist nach einem Verfahren gemäß einem der Ansprüche 1, 2, 4 bis 10 unter Einsatz des Reaktionsgases aus einem BMA-Prozeß und überhitztem Wasserdampf als Fluidisierungsgas.

## Claims

1. Process for the production of an alkali metal cyanide or alkaline earth metal cyanide granulate comprising a reaction of hydrogen cyanide with an alkali metal or alkaline earth metal hydroxide, wherein the alkali metal hydroxide is sprayed into a reactor in the form of an aqueous solution and the alkaline earth metal hydroxide in the form of an aqueous suspension and reacted therein with gaseous hydrogen cyanide, and vaporisation of the water introduced into and formed in the reactor,
characterised in that
the reaction is performed in a fluidised bed spray granulation reactor at a fluidised bed temperature in the range from 100 to 250°C, the stated solution or suspension is sprayed onto a fluidised bed of nuclei or the alkali metal or alkaline earth metal cyanide to be produced, a gas containing hydrogen cyanide is simultaneously introduced into the reactor in a quantity of at least one mole of HCN per metal equivalent and the water is vaporised by means of a fluidising gas flowing through the fluidised bed, the input temperature of which gas is between 110 and 500°C.

2. Process according to claim 1,
characterised in that
a reaction gas from a BMA or Shawinigan process containing hydrogen cyanide and hydrogen as the principal constituents is used as the gas containing hydrogen cyanide.

3. Process according to claim 1,
characterised in that
a reaction gas from an Andrussow process containing HCN, N₂, H₂, H₂O and CO as the principal constituents is used as the gas containing hydrogen cyanide.

4. Process according to one of claims 1 to 3,
characterised in that
NaCN or KCN granulate is produced, wherein the molar ratio of HCN to NaOH or KOH is in the range between 1 and 5 and the concentration of the alkali metal hydroxide solution to be sprayed is 10 to 70 wt.%.

5. Process according to one of claims 1 to 4,
characterised in that
the gas containing hydrogen cyanide is mixed into the fluidising gas stream below the bottom of the fluidised bed and/or is introduced into the reactor in the area of the fluidised bed.

6. Process according to one of claims 1 to 5,
characterised in that
the reaction is performed at a fluidised bed temperature in the range from 105 to 180°C and an input temperature of the fluidising gas in the range from 120 to 400°C.

7. Process according to one of claims 1 to 6,
characterised in that
superheated steam or a gas mixture containing superheated steam is used as the fluidising gas.

8. Process according to one of claims 1 to 7,
characterised in that
the gas stream leaving the fluidised bed is divided into two sub-streams, the first sub-stream is reheated and reused as fluidising gas and the second sub-stream (excess gas) is discharged from the circuit.

9. Process according to claim 8,
characterised in that
a gas containing hydrogen cyanide is mixed with the first sub-stream before or after the heating thereof and the gas mixture is used as fluidising gas.

10. Process according to claim 9,
characterised in that
a reaction gas from a BMA process or Shawinigan process containing HCN and H₂ at a temperature in the range from 1000 to 1500°C is added to the first sub-stream, wherein the reaction gas is cooled and the first sub-stream heated and the resultant gas mixture is used as fluidising gas.

11. Process according to claim 3,
characterized in that
the reaction gas containing HCN leaving an Andrussow process reactor at a temperature of above 1000°C is quenched by injection of water and is consequently cooled to a temperature in the range of 150 to 500°C and the resultant gas mixture is used as fluidising gas.

12. Process according to claim 11,
characterized in that
an NaCN or KCN granulate is produced by spraying, in addition to the NaOH or KOH solution, an aqueous solution containing NaCN or KCN onto the nuclei wherein the NaCN or KCN solution may comprise such a solution originating from waste gas scrubbing of the waste gas stream leaving the fluidised bed spray granulation reactor.

13. Process according to claim 11 or 12,
characterised in that
the stream of waste gas leaving the fluidized bed spray granulation reactor is divided into two sub-streams, the first sub-stream, after separation of particulates, is recycled in the Andrussow reactor and the second sub-stream is discharged from the circuit.

14. Alkali metal cyanide granulate based on sodium cyanide or potassium cyanide comprising the material data:
(i) substantially spherical particles having a smooth or raspberry-like surface structure,
(ii) a particle diameter in the range from 0.1 to 20 mm for 99 wt.% of the granulate,
(iii) a bulk density of at least 600 g/dm³,
(iv) abrasion of less than 1 wt.%, measured in a rolling abrasion test (TAR abrasion tester from Erweka with 20 g specimen, 60 minutes, 20 rpm)
(v) a caking index of at most 4, measured after subjecting 100 g to a load of 10 kg for 14 days in a cylinder of an internal diameter of 5.5 cm,
characterised in that
the content of alkali metal carbonate is less than 0.5 wt.% and the content of alkali metal formate is less than 0.3 wt.%, wherein the alkali metal in the stated secondary products is identical to that in the alkali metal cyanide.

15. Alkali metal cyanide granulate according to claim 14,
characterised in that
the sum of alkali metal carbonate and alkali metal formate is less than 0.4 wt.%.

16. Alkali metal cyanide granulate according to claim 14 or 15,
characterised in that
it may be obtained by a process according to one of claims 1, 2, 4 to 10 using the reaction gas from a BMA process and superheated steam as the fluidising gas.

## Revendications

1. Procédé de fabrication d'un granulé de cyanure de métal alcalin ou de cyanure de métal alcalino-terreux, comprenant un réaction d'un acide cyanhydrique avec un hydroxyde de métal alcalin ou de métal alcalino-terreux, dans lequel l'hydroxyde de métal alcalin est pulvérisé dans un réacteur sous la forme d'une réaction aqueuse et l'hydroxyde de métal alcalino-terreux est pulvérisé sous la forme d'une suspension aqueuse, et l'un et l'autre y sont mis à réagir avec l'acide cyanhydrique gazeux, et une évaporation de l'eau introduite est formée dans le réacteur,
caractérisé en ce qu'
on conduit la réaction dans un réacteur pour la granulation avec pulvérisation en couche fluidisée à une température de la couche fluidisée comprise entre 100 et 250°C, en ce qu'on pulvérise la solution ou suspension mentionnée sur une couche fluidisée de germes de cyanure de métal alcalin ou de cyanure de métal alcalino-terreux à produire, simultanément en ce qu'on introduit dans le réacteur un gaz contenant de l'acide cyanhydrique en une quantité d'au moins une mole d'HCN par équivalent métal et en ce qu'on fait évaporer l'eau au moyen d'un gaz de fluidisation s'écoulant à travers la couche fluidisée, et dont la température d'entrée se situe entre 110 et 500°C.

2. Procédé selon la revendication,
caractérisé en ce qu'
on utilise comme gaz contenant de l'acide cyanhydrique un gaz réactionnel contenant comme composants principaux de l'acide cyanhydrique et de l'hydrogène et provenant d'un procédé BMA ou de Shawinigan.

3. Procédé selon la revendication 1,
caractérisé en ce qu'
on utilise comme gaz contenant de l'acide cyanhydrique un gaz contenant comme constituants principaux HCN, N₂, H₂, H₂O et CO et provenant d'un procédé d'Andrussow.

4. Procédé selon l'une des revendications 1 à 3,
caractérisé en ce qu'
on produit un granulé de NaCN ou de KCN, dans lequel le rapport molaire d'HCN à NaOH ou KOH se situe dans un intervalle compris entre 1 et 5 et en ce que la concentration de la solution d'hydroxyde de métal alcalin à pulvériser s'élève à 10 à 70 % en poids.

5. Procédé selon l'une des revendications 1 à 4,
caractérisé en ce qu'
on mélange au courant de gaz de fluidisation le gaz contenant de l'acide cyanhydrique en-dessous du fond de la couche fluidisée et/ou en ce qu'on l'introduit dans le réacteur dans la zone de la couche fluidisée.

6. Procédé selon une des revendications 1 à 5,
caractérisé en ce qu'
on conduit la réaction à une température de couche fluidisée comprise entre 105 et 180°C et à une température d'entrée du gaz de fluidisation comprise entre 120 et 400°C.

7. Procédé selon l'une des revendications 1 à 6,
caractérisé en ce qu'
on utilise comme gaz de fluidisation de la vapeur d'eau surchauffé ou un mélange gazeux contenant de la vapeur d'eau surchauffée.

8. Procédé selon l'une des revendications 1 à 7, caractérisé en ce qu'
on sépare le courant gazeux sortant de la couche fluidisée en deux courants partiels, en ce qu'on chauffe à nouveau le premier courant partiel et en ce qu'on l'utilise à nouveau comme gaz de fluidisation et en ce qu'on évacue du cycle le second courant partiel (gaz en excès).

9. Procédé selon la revendication 8,
caractérisé en ce qu'
on mélange au premier courant partiel avant ou après l'avoir chauffé un gaz contenant de l'acide cyanhydrique, et en ce qu'on utilise le mélange gazeux comme gaz de fluidisation.

10. Procédé selon la revendication 9,
caractérisé en ce qu'
on ajoute au premier courant partiel un gaz réactionnel contenant HCN et H₂ d'un procédé BMA ou d'un procédé de Shawinigan à une température comprise entre 1000 et 1500°C, le gaz réactionnel étant refroidi et le premier courant partiel étant chauffé, et en ce qu'on utilise le mélange gazeux obtenu comme gaz de fluidisation.

11. Procédé selon la revendication 3,
caractérisé en ce qu'
on refroidit brutalement le réacteur du procédé Andrussow avec du gaz réactionnel contenant HCN qui le quitte à une température supérieure à 1000°C en pulvérisant de l'eau et en ce qu'on le refroidit alors à une température comprise entre 150 et 500°C, et en ce qu'on utilise le mélange gazeux obtenu comme gaz de fluidisation.

12. Procédé selon la revendication 11,
caractérisé en ce qu'
on fabrique un granulé de NaCN ou de KCN en pulvérisant sur les germes, outre la solution de NaOH ou de KAOH, une solution aqueuse contenant NaCN ou KCN, la solution de NaCN ou de KCN pouvant comprendre une solution d'une eau de lavage de gaz résiduaire provenant du courant de gaz résiduaire sortant du réacteur pour la granulation par pulvérisation en couche fluidisée.

13. Procédé selon la revendication 11 ou 12,
caractérisé en ce qu'
on sépare le courant gazeux sortant du réacteur pour la granulation avec pulvérisation en couche fluidisée, en ce qu'on recycle en deux courants partiels après séparation de la poussière dans le réacteur d'Andrussow et en ce qu'on évacue le second courant partiel du cycle.

14. Granulé de cyanure de métal alcalin à base de cyanure de sodium ou de cyanure de potassium comprenant les données suivantes sur les matériaux :
(i) des particules essentiellement sphériques à structure superficielle lisse ou en forme de framboise,
(ii) un diamètre particulaire compris entre 0,1 et 20 mm, de préférence 1 et 20 mm, pour 99 % en poids du granulé,
(iii) une densité apparente d'au moins 600 g/dm³, de préférence supérieure à 650 g/dm³, et
(iv) une usure inférieure à 1 % en poids, mesurée dans le test d'usure au rouleau (appareil de test d'usure TAR de la société RVK avec un échantillon de 20 g, 60 minutes, 20 tours/minute),
(v) un indice d'altération par chauffage d'au maximum 4, de préférence de 3 et inférieure à 3, mesuré après la sollicitation de 14 jours de 100 g dans un cylindre d'un alésage de 5,5 cm avec 10 kg,
caractérisé en ce que
la teneur en carbonate alcalin est inférieure à 0,5 % en poids et en ce que la teneur en formiate de métal alcalin est inférieure à 0,3 % en poids, le métal alcalin dans les sous-produits mentionnés étant identique à celui du cyanure de métal alcalin.

15. Granulé de cyanure de métal alcalin selon la revendication 14,
caractérisé en ce que
la somme du carbonate de métal alcalin et du formiate de métal alcalin est inférieure à 0,4 % en poids.

16. Granulé de cyanure de métal alcalin selon la revendication 14 ou 15,
caractérisé en ce qu'
on peut l'obtenir d'après un procédé des revendications 1, 2, 4 à 10 avec utilisation du gaz réactionnel provenant d'un procédé BMA et avec de la vapeur d'eau surchauffée comme gaz de fluidisation.
